# EUROPÄISCHE PATENTSCHRIFT

(11) **EP 1 119 469 B1**
(45) Veröffentlichungstag und Bekanntmachung des Hinweises auf die Patenterteilung: **01.09.2004**
(21) Anmeldenummer: 99939974.4
(22) Anmeldetag: 30.06.1999
(51) Int. Cl.: B60P 3/00

(54) **VERFAHREN UND VORRICHTUNG ZUR DEKONTAMINATION VON INNENRÄUMEN**
METHOD AND DEVICE FOR DECONTAMINATING INTERIOR SPACES
PROCEDE ET DISPOSITIF POUR DECONTAMINER DES ESPACES INTERIEURS

(30) Priorität: 14.10.1998 DE 19847238
(43) Veröffentlichungstag der Anmeldung: 01.08.2001
(73) Patentinhaber: Alfred Kärcher GmbH & Co. KG, 71364 Winnenden (DE)
(72) Erfinder: TÖPFER, Hans-Joachim, D-71522 Backnang (DE); KURZ, Roland, D-74405 Gaildorf (DE); HELLSTERN, Rüdiger, D-70599 Stuttgart (DE); REINHARDT, Ulli, D-71522 Backnang (DE); DRATCHNEV, Dimitri, D-73734 Esslingen (DE)
(74) Vertreter: HOEGER, STELLRECHT & PARTNER Patentanwälte
(86) Internationale Anmeldenummer: PCT/EP1999/004509
(87) Internationale Veröffentlichungsnummer: WO 2000/021789

(56) Entgegenhaltungen:
- EP-A- 0 248 322
- DE-A- 4 416 649
- DE-U- 9 114 613
- US-A- 4 141 374
- US-A- 4 240 175
- US-A- 4 309 788
- US-A- 5 147 002
- US-A- 5 501 396
- "MOBILE WATER AND SUPPLY UNIT" RESEARCH DISCLOSURE,GB,INDUSTRIAL OPPORTUNITIES LTD. HAVANT, Nr. 291, Seite 525 XP000006541 ISSN: 0374-4353

## Beschreibung

Die Erfindung betrifft ein Verfahren und eine Vorrichtung zur Dekontamination von Innenräumen mit den Merkmalen der Oberbegriffe der Patentansprüche 1 bzw. 2.

Für die Dekontamination unterschiedlichster Objekte, insbesondere von Kleingeräten und Bekleidung sowie zur Personenentgiftung und zur Entgiftung von Großgeräten und Gelände kommen üblicherweise Dekontaminationseinrichtungen zum Einsatz, die in Containern oder Fahrzeugaufbauten auf Transportfahrzeugen untergebracht sind. Um eine Dekontamination vornehmen zu können, sind Zeltaufbauten, Geräteumbauten und Leitungsverlegungen erforderlich, um einen Dekontaminationsplatz einzurichten. Zu dekontaminierende Kleingeräte und Bekleidungsstücke werden dann ebenso wie zu entgiftende Personen zum Dekontaminationsplatz transportiert und dort entgiftet. Eine derartige Vorgehensweise ist aus der DE 35 45 488 A1 bekannt.

Wenn im folgenden von einer Dekontamination die Rede ist, so soll darunter sowohl eine Entstrahlung radioaktiv verunreinigter Objekte, als auch eine Entseuchung biologisch verunreinigter Objekte und eine Entgiftung chemisch vergifteter Objekte verstanden werden.

Das voranstehend genannte Verfahren hat sich insbesondere zur Dekontamination von Kleingeräten und von Personen bewährt. Zur Dekontamination von Innenräumen ist es allerdings nur sehr eingeschränkt anwendbar, nämlich nur dann, wenn die Innenräume dem Dekontaminationsplatz unmittelbar benachbart sind. Sollen beispielsweise die Innenräume von Hubschraubern, Transportflugzeugen oder Fahrzeugen dekontaminiert werden, so ist es hierzu erforderlich, einen vollständigen Dekontaminationsplatz neben dem zu dekontaminierenden Innenraum aufzubauen. Dies ist mit einem außerordentlichen Aufwand verbunden und in vielen Fällen praktisch nicht realisierbar.

Aus der Druckschrift US-A-5 147 002 ist eine Vorrichtung zur Dekontamination von Innenräumen bekannt, wobei die Vorrichtung als ferngesteuertes Fahrzeug ausgestaltet ist und ein selbstfahrendes Fahrwerk mit einem Antriebsmotor umfaßt. Die Vorrichtung weist eine Sprüh-Extraktionseinrichtung auf zum Aufbringen einer Dekontaminationsflüssigkeit auf eine zu reinigende Innenoberfläche und zum Aufnehmen der verunreinigten Dekontaminationsflüssigkeit von der Oberfläche. Die Vorrichtung läßt sich an einer Basisstation fernsteuern, wobei sie permanent über Schlauchverbindungen mit einer ortsfesten Vakuumquelle und einem Vorrat für Dekontaminationsflüssigkeit verbunden ist.

Aufgabe der vorliegenden Erfindung ist es, ein Verfahren anzugeben, mit dem der Innenraum eines Objektes, das nicht einem Dekontaminationsplatz zugeführt werden kann, auf einfache Weise dekontaminiert werden kann.

Diese Aufgabe wird bei einem Verfahren der eingangs beschriebenen Art erfindungsgemäß dadurch gelöst, daß die Basisstation einen Vorrat an Betriebsstoffen für die Untereinheit aufweist und die Untereinheit einen Behälter für Dekontaminationsmittel umfaßt, und daß man die Untereinheit an der Basisstation mit Dekontaminationsmittel und Betriebsstoffen versorgt, die Untereinheit zu dem Objekt mit dem zu dekontaminierenden Innenraum fährt, dort mittels der Dekontaminationsausrüstung und des Dekontaminationsmittels die Innenraumdekontamination durchführt und anschließend die Untereinheit zur Basisstation zurückfährt, um erneut Dekontaminationsmittel und Betriebsstoffe aufzunehmen.

Ein derartiges Verfahren ermöglicht es, beispielsweise einen zentralen Dekontaminationsplatz aufzubauen, der als Basisstation dient und die Versorgung der mobilen Untereinheiten mit Dekontaminationsmittel sowie mit den erforderlichen Betriebsstoffen, insbesondere Kraftstoffen, gewährleistet. Eine geländegängige, selbstfahrende Untereinheit kann dann vorzugsweise von einer einzigen Bedienungsperson zu einem Objekt gefahren werden, dessen Innenräume zu dekontaminieren sind, und mittels der Untereinheit kann die Dekontamination durchgeführt werden, hierfür weist die mobile Untereinheit die erforderliche Dekontaminationsausrüstung auf. Wie nachfolgend erläutert wird, kann es sich hierbei beispielsweise um ein Sprüh-Extraktionsgerät handeln, mit dem eine Dekontaminationslösung oder -emulsion auf die beispielsweise radioaktiv verunreinigte Oberfläche des Innenraums aufgetragen und anschließend wieder abgesaugt werden kann. Hierzu kann die mobile Untereinheit zusätzlich zu einem Behälter für einsatzfähiges Dekontaminationsmittel einen Aufnahmetank für verbrauchtes Dekontaminationsmittel umfassen, der dann nach der Rückkehr der

Untereinheit an der Basisstation entleert, beispielsweise abgepumpt, werden kann.

Der Erfindung liegt auch die Aufgabe zugrunde, eine Vorrichtung zur Dekontamination von Innenräumen, insbesondere zur Durchführung des voranstehend erläuterten Verfahrens bereitzustellen.

Diese Aufgabe wird bei einer Vorrichtung der eingangs genannten Art erfindungsgemäß dadurch gelöst, daß die Vorrichtung als mobile Untereinheit ausgestaltet ist mit einem geländegängigen Fahrwerk, einem Vorratstank für die Dekontaminationsflüssigkeit, einem Aufnahmetank für verbrauchte Dekontaminationsflüssigkeit und mit einem Generator, wobei die verbrauchte Dekontaminationsflüssigkeit mittels der Sprüh-Extraktionseinrichtung in den Aufnahmetank überführbar ist.

Eine derartige Vorrichtung bildet eine mobile Untereinheit für das voranstehend beschriebene verfahren. Die erforderliche Mobilität wird durch den Einsatz des geländegängigen, selbstfahrenden Fahrwerks gewährleistet. Als Dekontaminationsausrüstung kommt eine Sprüh-Extraktionseinrichtung zum Einsatz, mit deren Hilfe Innenoberflächen entstrahlt, entseucht und entgiftet werden können. Hierzu wird eine Dekontaminationsflüssigkeit auf die kontaminierte Oberfläche aufgesprüht. Anschließend wird die Flüssigkeit zusammen mit der Kontamination wieder abgesaugt und in einen auf dem Fahrwerk angeordneten Aufnahmetank überführt. Nach Rückkehr der eine mobile Untereinheit ausbildenden Vorrichtung zur Basisstation, beispielsweise einem zentralen Dekontaminationsplatz, kann der Aufnahmetank entleert und der Vorratstank erneut mit Dekontaminationsflüssigkeit gefüllt werden.

Die erfindungsgemäße Vorrichtung umfaßt außerdem einen Generator zur Energieversorgung der Sprüh-Extraktionseinrichtung.

Von Vorteil ist es, wenn die Vorrichtung mindestens ein elektrisches Anschlußelement zum Anschluß elektrisch betriebener Zusatzgeräte aufweist, so daß elektrisch betriebene Zusatzgeräte mit elektrischer Energie versorgt werden können. Zur Halterung der Zusatzgeräte weist die erfindungsgemäße Vorrichtung vorzugsweise entsprechende Halteelemente auf.

Als Zusatzgeräte kann beispielsweise zur Steigerung der Wirksamkeit der Dekontamination bei einer Entstrahlung (A-Dekontamination) ein Naß-Trocken-Sauggerät vorgesehen sein, bei einer Entseuchung (8-Dekontamination) kommt vorteilhafterweise ein Aerosol-Generator zum Einsatz, mit dessen Hilfe eine biologisch wirksames Aerosol versprüht werden kann. Ergänzend kann ein Dampf-Extraktions-Gerät vorgesehen sein, so daß mit minimalem Einsatz von Chemikalien oder ohne jegliche Chemikalien lediglich mit Wasserdampf eine Dekontamination durchgeführt werden kann. Entsprechend der Sprüh-Extraktion werden bei der Dampf-Extraktion die anfallenden Dekontaminationsabprodukte, d. h. die Kontaminationsstoffe, Reaktionsprodukte und kondensierter Wasserdampf, nach der Applikation wieder abgesaugt und in den Aufnahmetank geleitet.

Von Vorteil ist es, wenn der Aufnahmetank einen Absauganschluß umfaßt zum Absaugen der verbrauchten Dekontaminationsflüssigkeit. Das Entleeren des Aufnahmetankes an der Basisstation kann dadurch beträchtlich vereinfacht werden.

Für den Einsatz der Sprüh-Extraktionseinrichtung werden auf dem Fahrwerk der Vorrichtung zwei Tanks bereitgestellt, nämlich ein Vorratstank für die anwendungsbereite Dekontaminationsflüssigkeit und ein Aufnahmetank für die verbrauchte Dekontaminationsflüssigkeit, d. h. für die Dekontaminationsabprodukte. Um die Abmessung der erfindungsgemäßen Vorrichtung zu minimieren und diese damit besonders handhabbar zu gestalten, ist bei einer bevorzugten Ausgestaltung vorgesehen, daß der Vorrats- und der Aufnahmetank jeweils eine Kammer eines kombinierten Doppeltankes ausbilden, wobei die beiden Kammern mittels einer veränderlichen Zwischenwand getrennt sind. Letztere kann beispielsweise als flexible Membran ausgebildet sein.

Eine derartige Ausgestaltung hat eine beachtliche Verringerung des erforderlichen Tankvolumens zur Folge, denn zu Beginn des Einsatzes kann der Vorratstank vollständig mit Dekontaminationsflüssigkeit gefüllt werden, und das Volumen für den Aufnahmetank kann aufgrund der zum Einsatz kommenden flexiblen Zwischenwand auf ein Minimum reduziert werden. Im Verlaufe der Dekontamination wird die Dekontaminationsflüssigkeit über die Sprüh-Extraktionseinrichtung auf die zu dekontaminierende Oberfläche beispielsweise eines Fahrzeuginnenraumes aufgebracht. Gleichzeitig werden die Dekontaminationsabprodukte, also die mit Kontaminationsstoffen und Reaktionsprodukten verunreinigte, verbrauchte Dekontaminationsflüssigkeit, wieder abgesaugt und in den Aufnahmetank des kombinierten Doppeltankes überführt. Während der Anteil an anwendungsbereiter Dekontaminationsflüssigkeit kontinuierlich abnimmt, nimmt gleichzeitig der Anteil an verbrauchter Dekontaminationsflüssigkeit zu. Zum Ende des Einsatzes ist dann der Aufnahmetank vollständig gefüllt und das Volumen für den Vorratstank auf ein Minimum reduziert.

Bevorzugt ist vorgesehen, daß die Vorrichtung eine Füllstandsanzeige für den Vorratstank und/oder den Aufnahmetank aufweist.

Günstig ist es, wenn der Vorratstank einen Anschluß zum externen Befüllen aufweist, so daß er innerhalb kurzer Zeit beispielsweise über eine Schlauchleitung gefüllt werden kann, über die der Vorratstank an der Basisstation an einen zentralen Versorgungstank anschließbar ist.

Um ein Einfrieren der Flüssigkeiten zu verhindern, sind der Vorrats- und der Aufnahmetank, insbesondere bei einer Ausgestaltung in Form eines kombinierten Doppeltankes, wärmeisoliert. Zusätzlich oder alternativ kann vorgesehen sein, daß der Vorrats- und der Aufnahmetank eine Heizeinrichtung umfassen, beispielsweise eine elektrische Heizspirale.

Bei einer besonders bevorzugten Ausführungsform ist vorgesehen, daß der Antriebsmotor als kraftstoffbetriebener Motor ausgestaltet ist. Hierbei ist es von Vorteil, wenn der Motor wahlweise mit Dieselkraftstoff oder mit Kerosin betrieben werden kann.

Die Innenraumdekontamination ist insbesondere bei Hubschraubern, Transportflugzeugen und Fahrzeugen vorgesehen. Um diese gegebenenfalls im Gelände verteilten Objekte erreichen zu können, ist die Vorrichtung mit einem selbstfahrenden Fahrwerk ausgestaltet. Hierbei ist es besonders vorteilhaft, wenn das Fahrwerk als Raupenfahrwerk und somit besonders geländegängig ausgestaltet ist.

Das Fahrwerk kann einen Hydroantrieb umfassen, dessen Antriebsenergie vom Antriebsmotor bereitgestellt wird. Hierbei kann der Hydroantrieb eine Hydraulikpumpe aufweisen, die für jede Kette des Raupenfahrwerks jeweils einen Hydraulikmotor antreibt. Eine derartige Ausgestaltung gewährleistet eine besonders gute Geländegängigkeit, wobei eine Vorwärtsfahrt und eine Rückwärtsfahrt möglich sind und Steigfähigkeiten von beispielsweise bis ungefähr fünfzig Prozent entsprechend einem Winkel von 23° erzielt werden können.

Bevorzugt umfaßt die Sprüh-Extraktionseinrichtung eine Pumpe zum Fördern der Dekontaminationsflüssigkeit, eine Druckleitung mit einem an ihrem freien Ende angeordneten Applikationsteil zum Überführen und Aufbringen der von der Pumpe geförderten Dekontaminationsflüssigkeit vom Vorratstank auf die zu dekontaminierende Oberfläche sowie eine Saugleitung und ein Saugaggregat zum Aufnehmen und Rückführen der verunreinigten Dekontaminationsflüssigkeit von der Oberfläche in den Aufnahmetank. Hierbei ist es von Vorteil, wenn die Sprüh-Extraktionseinrichtung auch als reine Sprüheinrichtung zum Aufsprühen einer Dekontaminationsflüssigkeit oder auch als reine Extraktionseinrichtung zum Aufnehmen einer verbrauchten Dekontaminationsflüssigkeit betreibbar ist. Hierzu kann beispielsweise vorgesehen sein, daß die Sprüh-Extraktionseinrichtung eine Schalteinrichtung umfaßt zum wahlweisen Ansteuern lediglich der Pumpe oder des Saugaggregates oder aber zum gleichzeitigen Betrieb beider Geräte.

Um die Handhabung zu erleichtern, ist es günstig, wenn die Druckleitung und die Druckleitung in einen einzigen Applikationsschlauch integriert sind. So kann beispielsweise ein doppelwandiger Schlauch mit einer Aussenwand und einer koaxial zu dieser angeordneten Innenwand vorgesehen sein, wobei die Innenwand eine Druckleitung definiert, während der radial außenliegende Bereich zwischen der Innenwand und der Außenwand die Saugleitung aufnimmt. Eine derartige Ausgestaltung des Applikationsschlauchs hat insbesondere den Vorteil, daß die verbrauchte Dekontaminationsflüssigkeit, die aufgrund des Wärmekontaktes mit der in vielen Fällen Zimmertemperatur aufweisenden Innenoberfläche erwärmt ist, im äußeren Bereich des Applikationsschlauchs geführt ist und damit auch ein Abkühlen der anwendungsbereiten Dekontaminationsflüssigkeit in der Druckleitung vermeidet, die von der Saugleitung umgeben ist.

Um ein Einfrieren der Flüssigkeiten zu verhindern, ist bei einer bevorzugten Ausführungsform vorgesehen, daß der Applikationsschlauch ein Heizelement umfaßt, beispielsweise kann der Applikationsschlauch mit einem elektrischen Heizband umwickelt sein.

Alternativ oder ergänzend kann vorgesehen sein, daß der Applikationsschlauch eine Wärmeisolierung umfaßt.

Die Handhabung der erfindungsgemäßen Vorrichtung kann dadurch erleichtert werden, daß die Vorrichtung eine Schlauchtrommel zum Aufwickeln der Druckleitung und der Saugleitung aufweist. Die Schlauchtrommel kann beispielsweise mittels einer Handkurbel betätigt werden, so daß sich auf einfache Weise Druck- und Saugleitung, die vorzugsweise in Form des doppelwandigen Schlauches ausgestaltet sind, abrollen lassen, um die Dekontaminationsflüssigkeit in den zu dekontaminierenden Innenraum zu überführen, und nach erfolgter Dekontamination läßt sich der Schlauch innerhalb kurzer Zeit wieder aufwikkeln. Hierbei kann eine besonders einfache Handhabung dadurch erzielt werden, daß die Schlauchtrommel Drehdurchführungen für die Druck- und die Saugleitung umfaßt.

Die Pumpe und/oder das Saugaggregat werden bevorzugt der Schlauchtrommel benachbart angeordnet, so daß die Schlauchtrommel aufgrund der Abwärme der Pumpe oder des Saugaggregates erwärmt wird und somit verhindert werden kann, daß im aufgewickelten Schlauch verbleibende Dekontaminationsflüssigkeit innerhalb kurzer Zeit einfrieren kann.

Bei einer besonders bevorzugten Ausführungsform ist vorgesehen, daß die Pumpe, das Saugaggregat und die Schlauchtrommel in einem von der Abwärme des Antriebsmotors erwärmbaren Aufnahmeraum der Vorrichtung angeordnet sind. So kann beispielsweise vorgesehen sein, daß eine Auspuffleitung des Antriebsmotors durch den Aufnahmeraum geführt ist, der die Pumpe, das Saugaggregat und die Schlauchtrommel aufnimmt. Dadurch wird sichergestellt, daß auch während der Fahrt der Vorrichtung, beispielsweise zurück zur Basisstation nach einer erfolgten Dekontamination, in der Pumpe, dem Saugaggregat oder dem aufgewickelten Applikationsschlauch verbleibende Flüssigkeiten nicht einfrieren können.

Alternativ oder ergänzend kann vorgesehen sein, daß die Vorrichtung eine Frostschutzhaube zum Abdecken der Schlauchtrommel aufweist. Die Frostschutzhaube kann abnehmbar oder verschwenkbar am Vorrats- oder Aufnahmetank gehalten sein und der Bedienungsperson einen Zugang zum Aufnahmeraum ermöglichen, in dem insbesondere die Schlauchtrommel angeordnet ist.

Die nachfolgende Beschreibung einer bevorzugten Ausführungsform der Erfindung dient im Zusammenhang mit der Zeichnung der näheren Erläuterung. Es zeigen:
- Figur 1:: einen Längsschnitt einer Vorrichtung zur Dekontamination von Innenräumen und
- Figur 2:: eine Vorderansicht auf die in Figur 1 dargestellte Vorrichtung bei abgenommener Frostschutzhaube.

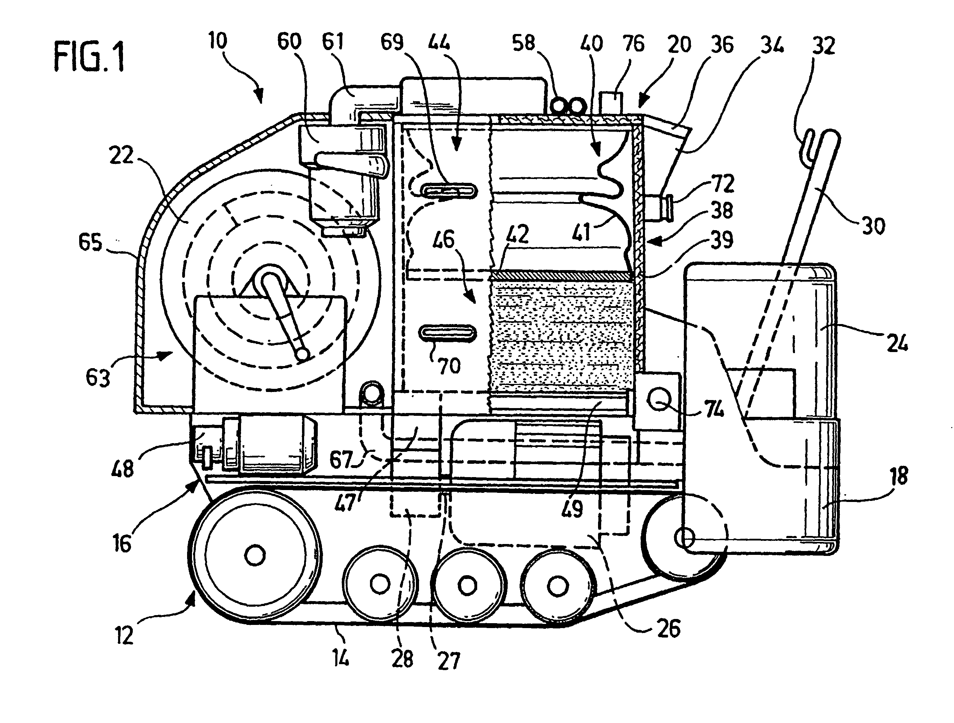

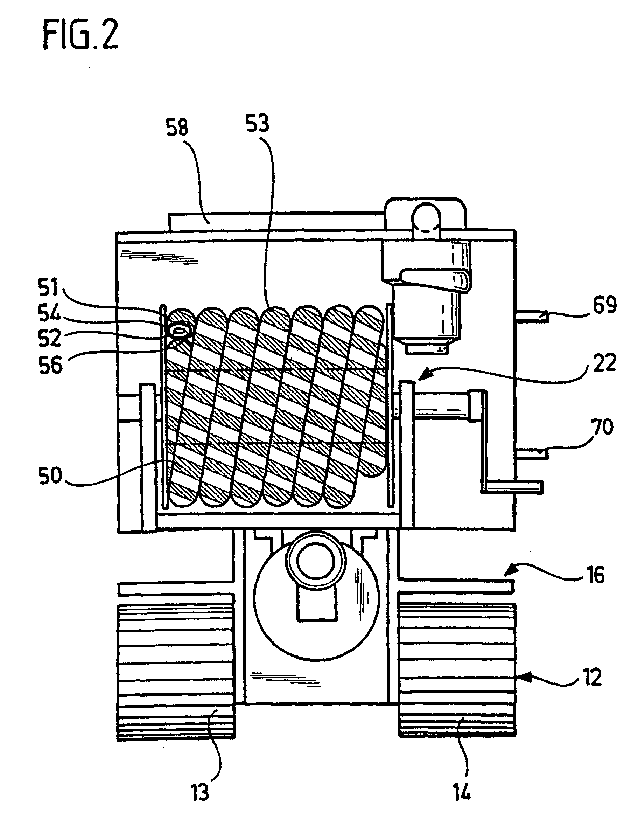

In den Figuren 1 und 2 ist eine insgesamt mit dem Bezugszeichen 10 belegte Vorrichtung zur Dekontamination von Innenräumen dargestellt. Hierbei handelt es sich um ein geländegängiges, selbstfahrendes Fahrzeug mit einem Raupen- oder Kettenfahrwerk 12, welches zwei seitlich entlang der Vorrichtung 10 geführte Ketten 13, 14 umfaßt, und mit einem Fahrzeugrahmen 16, der eine Motoraufnahme 18, einen Flüssigkeitsbehälter 20 sowie eine Schlauchtrommel 22 trägt.

Der Antrieb der Vorrichtung 10 erfolgt über einen in der Motoraufnahme 18 gehaltenen Dieselmotor 24, der über an sich bekannte und deshalb in der Zeichnung nicht dargestellte Kupplungselemente mit einem Generator 26 verbunden ist. Dieser weist eine durchgehende Antriebswelle 27 auf, an deren dem Dieselmotor 24 abgewandtem Ende eine Hydraulikpumpe 28 angeflanscht ist, die ihrerseits in der Zeichnung nicht dargestellte, an sich bekannte Hydromotoren der jeweiligen Kette 13, 14 des Raupenfahrwerks 12 antreibt. Die Ansteuerung der Hydraulikpumpe und der beiden Hydromotoren erfolgt über eine nicht dargestellte, an sich bekannte Hydrauliksteuerung.

Von der Motoraufnahme 18 erstreckt sich schräg nach oben ein Lenkbügel 30, an dem zur Steuerung der beiden Hydromotoren Bedienelemente 32 gehalten sind, wobei in der Zeichnung nur eines der Bedienelemente dargestellt ist.

Ungefähr in Höhe des freien Endes des Lenkbügels 30 ist am Flüssigkeitsbehälter 20 ein Bedienpult 34 angeordnet, der Steueraggregate 36 der Vorrichtung 10 aufnimmt.

Der Flüssigkeitsbehälter 20 ist doppelwandig ausgebildet und umfaßt eine wärmeisolierende Außenwand 38 mit einem Dämmstoff 39 sowie eine veränderbare Zwischenwand 40 mit einer flexiblen Membran 41, die im wesentlichen vertikal ausgerichtet ist, und einer ungefähr horizontal ausgerichteten Trennwand 42. Die flexible Membran 41 und die Trennwand 42 sind sackartig in den Flüssigkeitsbehälter 20 eingehängt und bilden einen Aufnahmetank 44, während der unterhalb der Trennwand 42 gelegene Innenbereich des Flüssigkeitsbehälters 20 einen Vorratstank 46 ausbildet.

Zur Erwärmung des Flüssigkeitsbehälters 20 ist in seinem Innenraum eine elektrische Heizung 47 mit einer Heizspirale 49 angeordnet, die vom Generator 26 mit Energie versorgt werden kann.

Der Vorratstank 46 nimmt eine anwendungsbereite Dekontaminationsflüssigkeit auf und steht über eine in der Zeichnung nicht dargestellte Vorratsleitung mit einer unterhalb der Schlauchtrommel 22 am Fahrzeugrahmen 16 gehaltenen Pumpe 48 in Strömungsverbindung, an der wiederum ein auf der Schlauchtrommel 22 aufgewickelter Schlauch 50 angeschlossen ist.

Der Schlauch 50 ist doppelwandig ausgestaltet und weist eine Außenwand 51 sowie eine Innenwand 52 auf. Die Innenwand 52 begrenzt eine zentral im Schlauch 50 angeordnete Druckleitung 54, während der radial außenliegende Bereich zwischen der Innenwand 52 und der Außenwand 51 eine Saugleitung 56 ausbildet.

Um ein Einfrieren der Dekontaminationsflüssigkeit bei kalter Witterung im Schlauch 50 zu verhindern, ist der Schlauch 50 von einem Heizband 53 umgeben. Zur Stromversorgung des Heizbandes 53 ist an der Schlauchtrommel 22 ein Steck-Kontakt (nicht dargestellt) vorgesehen, der nach dem Abrollen des Schlauches 50 geschlossen wird.

Alternativ kann auch vorgesehen sein, daß das Heizband 53 in den Schlauch 59 integriert ist.

Die Druckleitung 54 steht mit dem Hochdruckanschluß der Pumpe 48 in Strömungsverbindung, während die Saugleitung 56 über eine in der Zeichnung nicht dargestellte Verbindungsleitung mit dem Aufnahmetank 44 verbunden ist.

Am freien Ende des Schlauches 50 läßt sich über an sich bekannte und deshalb zur Erzielung einer besseren Übersichtlichkeit in der Zeichnung weggelassene Verbindungselemente ein Applikationsteil 58 anschließen, beispielsweise eine Sprühdüse mit integrierter Sauglippe. Das Applikationsteil 58 kann, wie in der Zeichnung dargestellt, während der Fahrt der Vorrichtung 10 oberhalb des Flüssigkeitsbehälters 20 lösbar befestigt werden.

Der Schlauchtrommel 22 benachbart ist auf der dem Bedienpult 34 abgewandten Seite des Flüssigkeitsbehälters 20 ein Saugaggregat in Form einer Saugturbine 60 gehalten, die über eine Absaugleitung 61 mit dem Innenraum des Aufnahmetankes 44 in Strömungsverbindung steht. Mittels der Saugturbine 60 läßt sich der Aufnahmetank 44 mit einem Unterdruck beaufschlagen.

Die Schlauchtrommel 22, die Pumpe 48 und die Saugturbine 60 sind einander benachbart in einem Aufnahmeraum 63 der Vorrichtung 10 angeordnet, der von einer Frostschutzhaube 65 überdeckt wird. Eine vom Dieselmotor 24 ausgehende Auspuffleitung 67 ist mit ihrem Endbereich durch den Aufnahmeraum 63 hindurch geführt. Dies hat zur Folge, daß der Aufnahmeraum 63 von den heißen Abgasen des Dieselmotores 24 erwärmt werden kann.

Seitlich sind an der Außenwand 38 des Flüssigkeitsbehälters 20 in der Zeichnung nur schematisch dargestellte Haltebügel 69, 70 angeordnet, an denen Zusatzgeräte, beispielsweise ein Aerosolgenerator und/oder ein Naß-Trocken-Sauggerät lösbar gehalten werden können.

Unterhalb des Bedienpultes sind an der Außenwand 38 des Flüssigkeitsbehälters 20 mehrere Steckdosen 72 angeordnet. Diese sind über in der Zeichnung nicht dargestellte elektrische Leitungen an den Generator 26 angeschlossen und dienen der Stromversorgung der an den Haltebügeln 69 und 70 befestigbaren Zusatzgeräte.

Zur Dekontamination zum Beispiel des Innenraumes eines Hubschraubers kann der Vorratstank 46 beispielsweise an einer als zentraler Dekontaminationsplatz ausgebildeten Basisstation mit einer effektiven Dekontaminationslösung oder -emulsion aufgefüllt werden. Zusätzlich kann ein in der Zeichnung nicht dargestellter Kraftstofftank mit Dieselkraftstoff für den Betrieb des Dieselmotors 24 gefüllt werden. Die Vorrichtung 10 kann dann mittels des geländegängigen Raupenfahrwerkes auf einfache Weise selbst in schwierigem Gelände zu dem Hubschrauber gefahren werden, dessen Innenraum zu dekontaminieren ist. Dort kann der auf der Schlauchtrommel 22 aufgewickelte Schlauch 50 ausgerollt werden. Anschließend kann mittels der Pumpe 48 Dekontaminationsflüssigkeit aus dem Vorratstank 48 entnommen und über die Druckleitung 54 und das Applikationsteil 58 auf die zu dekontaminierende Oberfläche aufgesprüht werden. Die verbrauchte Dekontaminationsflüssigkeit läßt sich dann über das Applikationsteil 58 und die Saugleitung 56 absaugen und in den Aufnahmetank 44 überführen, der zu diesem Zwecke von der Saugturbine 60 mit einem Unterdruck beaufschlagt wird. Zur Steigerung der Dekontaminationswirkung können dann noch die an den Haltebügeln 69, 70 gehaltenen Zusatzgeräte benutzt werden, deren Energieversorgung ebenso vom Generator 26 bereitgestellt wird, wie die Energieversorgung der Pumpe 48 und der Saugturbine 60.

Nach erfolgter Dekontamination kann die Vorrichtung 10 wieder zur Basisstation zurückgefahren werden. Dort läßt sich der Aufnahmetank 44 über einen Absauganschluß 74 abpumpen, und über einen Füllanschluß 76 kann dann der Vorratstank 46 erneut mit anwendungsbereiter Dekontaminationsflüssigkeit gefüllt werden. Somit lassen sich auf einfache Weise mittels der erfindungsgemäß Vorrichtung 10 auch die Innenräume von Objekten dekontaminieren, die nicht einem zentralen Dekontaminationsplatz zugeführt werden können.

## Patentansprüche

1. Verfahren zur Dekontamination von Innenräumen, wobei man eine Basisstation und mindestens eine mobile Untereinheit bereitstellt und wobei die Basisstation einen Vorrat an Dekontaminationsmittel umfaßt und die Untereinheit ein geländegängiges, selbstfahrendes Fahrwerk mit einem Antriebsmotor sowie eine Dekontaminationsausrüstung aufweist, **dadurch gekennzeichnet, daß** die Basisstation einen Vorrat an Betriebsstoffen für die Untereinheit und die Untereinheit einen Behälter für einsatzfähiges Dekontaminationsmittel aufweist und daß man die Untereinheit an der Basisstation mit Dekontaminationsmittel und mit Betriebsstoffen versorgt, die Untereinheit dann zu dem Objekt mit dem zu dekontaminierenden Innenraum fährt, dort mittels der Dekontaminationsausrüstung und des Dekontaminationsmittels die Innenraumdekontamination durchführt und anschließend die Untereinheit zur Basisstation zurückfährt, um erneut Dekontaminationsmittel und Betriebsstoffe aufzunehmen.

2. Vorrichtung zur Dekontamination von Innenräumen, insbesondere zur Durchführung des Verfahrens gemäß Anspruch 1, wobei die Vorrichtung (10) ein selbstfahrendes Fahrwerk (12) mit einem Antriebsmotor (24) umfaßt sowie eine Sprüh-Extraktionseinrichtung (48, 22, 58, 60) zum Aufbringen einer Dekontaminationsflüssigkeit auf eine zu dekontaminierende Innenoberfläche und zum Aufnehmen der verunreinigten Dekontaminationsflüssigkeit von der Oberfläche, **dadurch gekennzeichnet, daß** die Vorrichtung als mobile Untereinheit ausgestaltet ist mit einem geländegängigen Fahrwerk (10), einem Vorratstank (46) für die Dekontaminationsflüssigkeit, einem Aufnahmetank für verbrauchte Dekontaminationsflüssigkeit und mit einem Generator (26), wobei die verbrauchte Dekontaminationsflüssigkeit mittels der Sprüh-Extraktionseinrichtung (48, 22, 58, 60) in den Aufnahmetank (44) überführbar ist.

3. Vorrichtung nach Anspruch 2, **dadurch gekennzeichnet, daß** die Vorrichtung (10) mindestens ein elektrisches Anschlußelement (72) zum Anschluß elektrisch betriebener Zusatzgeräte sowie Halteelemente (69, 70) zum Halten der Zusatzgeräte, insbesondere von einem Naß-Trocken-Sauggerät, einem Aerosol-Generator und/oder einem Dampf-Extraktionsgerät, umfaßt.

4. Vorrichtung nach Anspruch 2 oder 3, **dadurch gekennzeichnet, daß** der Aufnahmetank (44) einen Absauganschluß (74) umfaßt zum Absaugen der verbrauchten Dekontaminationsflüssigkeit.

5. Vorrichtung nach einem der Ansprüche 2 bis 4, **dadurch gekennzeichnet, daß** der Vorrats- und der Aufnahmetank (46 bzw. 44) jeweils eine Kammer eines kombinierten Doppeltankes (20) ausbilden, wobei die beiden Kammern mittels einer veränderlichen Zwischenwand (40) voneinander getrennt sind.

6. Vorrichtung nach Anspruch 5, **dadurch gekennzeichnet, daß** die Zwischenwand (40) eine flexible Membran (41) umfaßt.

7. Vorrichtung nach einem der Ansprüche 2 bis 6, **dadurch gekennzeichnet, daß** der Vorrats- und der Aufnahmetank (44, 46) wärmeisoliert sind.

8. Vorrichtung nach Anspruch 7, **dadurch gekennzeichnet, daß** der Vorrats- und der Aufnahmetank (46, 44) eine Heizeinrichtung umfassen.

9. Vorrichtung nach einem der Ansprüche 2 bis 8, **dadurch gekennzeichnet, daß** der Antriebsmotor als kraftstoffbetriebener Motor (24) ausgestaltet ist.

10. Vorrichtung nach Anspruch 9, **dadurch gekennzeichnet, daß** der Antriebsmotor wahlweise mit Dieselkraftstoff oder mit Kerosin betreibbar ist.

11. Vorrichtung nach einem der Ansprüche 2 bis 10, **dadurch gekennzeichnet, daß** das Fahrwerk als Raupenfahrwerk (12) ausgestaltet ist.

12. Vorrichtung nach einem der Ansprüche 2 bis 11, **dadurch gekennzeichnet, daß** das Fahrwerk einen Hydroantrieb umfaßt.

13. Vorrichtung nach Anspruch 12, **dadurch gekennzeichnet, daß** der Hydroantrieb eine Hydraulikpumpe (28) aufweist, die für jede Kette (13, 14) des Raupenfahrwerkes (12) jeweils einen Hydraulikmotor antreibt.

14. Vorrichtung nach einem der Ansprüche 2 bis 13, **dadurch gekennzeichnet, daß** die Sprüh-Extraktionseinrichtung eine Pumpe (48) zum Fördern der Dekontaminationsflüssigkeit, eine Druckleitung (54) mit einem an ihrem freien Ende angeordneten Applikationsteil (58) zum Überführen und Aufbringen der von der Pumpe (48) geförderten Dekontaminationsflüssigkeit vom Vorratstank (46) auf die zu dekontaminierende Oberfläche sowie eine Saugleitung (56) und ein Saugaggregat (60)0 zum Aufnehmen verbrauchter Dekontaminationsflüssigkeit und Rückführen derselben in den Aufnahmetank (44) umfaßt.

15. Vorrichtung nach Anspruch 14, **dadurch gekennzeichnet, daß** die Druck- und die Saugleitung (54, 56) in einen einzigen Applikationsschlauch (50) integriert sind.

16. Vorrichtung nach Anspruch 15, **dadurch gekennzeichnet, daß** der Applikationsschlauch (50) eine Wärmeisolierung aufweist.

17. Vorrichtung nach Anspruch 15 oder 16, **dadurch gekennzeichnet, daß** der Applikationsschlauch (50) ein Heizelement umfaßt.

18. Vorrichtung nach einem der Ansprüche 15, 16 oder 17, **dadurch gekennzeichnet, daß** die Vorrichtung (10) eine Schlauchtrommel (22) zum Aufwickeln der Druckleitung (54) und der Saugleitung (56) aufweist.

19. Vorrichtung nach einem der Ansprüche 14 bis 18, **dadurch gekennzeichnet, daß** die Pumpe (48) und/oder das Saugaggregat (60) der Schlauchtrommel (22) benachbart angeordnet sind.

20. Vorrichtung nach einem der Ansprüche 14 bis 19, **dadurch gekennzeichnet, daß** die Pumpe (48), das Saugaggregat (60) und die Schlauchtrommel (22) in einem von der Abwärme des Antriebsmotors (24) erwärmbaren Aufnahmeraum (63) der Vorrichtung (10) angeordnet sind.

21. Vorrichtung nach Anspruch 19 oder 20, **dadurch gekennzeichnet, daß** die Vorrichtung (10) eine Frostschutzhaube (65) zum Abdecken der Schlauchtrommel (22) umfaßt.

## Claims

1. A process for decontaminating interior spaces, in which a base station and at least one mobile sub-unit are provided and in which the base station contains a supply of decontamination agent and the sub-unit contains an off-road, automotive travelling mechanism having a drive motor and also decontamination equipment, **characterised in that** the base station has a supply of fuel for the sub-unit and the sub-unit has a container for useable decontamination agent and **in that** the sub-unit is supplied with decontamination agent and fuel at the base station, the sub-unit then travels to the object having the interior space to be decontaminated and carries out the decontamination of the interior space there by means of the decontamination equipment and the decontamination agent and then the sub-unit returns to the base station in order to receive further decontamination agent and fuel.

2. A device for decontaminating interior spaces, particularly for carrying out the process according to Claim 1, the device (10) including an automotive travelling mechanism (12) having a drive motor (24) and also a spray extraction means (48, 22, 58, 60) for applying a decontamination fluid to an interior surface to be decontaminated and for receiving the contaminated decontamination fluid from the surface, **characterised in that** the device is constructed as a mobile sub-unit having an off-road travelling mechanism (10) a supply tank (46) for the decontamination fluid and a receiving tank for used decontamination fluid and having a generator (26), the used decontamination fluid being transferable into the receiving tank (44) by means of the spray extraction means (48, 22, 58, 60).

3. A device according to Claim 2, **characterised in that** the device (10) includes at least one electrical connection element (72) for connecting electrically operated attachments and also holding elements (69, 70) for holding the attachments, particularly of a wet/dry suction device, an aerosol generator and/or a steam extraction device.

4. A device according to Claim 2 or 3, **characterised in that** the receiving tank (44) includes a suction connection (74) for sucking up the used decontamination fluid.

5. A device according to one of Claims 2 to 4, **characterised in that** the supply tank and the receiving tank (46 and 44 respectively) each form a chamber of a combined double tank (20), the two chambers being separated from one another by means of an adjustable partition wall (40).

6. A device according to Claim 4, **characterised in that** the partition wall (40) includes a flexible diaphragm (41).

7. A device according to one of Claims 2 to 6, **characterised in that** the supply tank and the receiving tank (44, 46) are heat-insulated.

8. A device according to Claim 7, **characterised in that** the supply tank and the receiving tank (46, 44) include a heating device.

9. A device according to one of Claims 2 to 8, **characterised in that** the drive motor is constructed as a fuel-driven motor (24).

10. A device according to Claim 9, **characterised in that** the drive motor may be run by either diesel fuel or kerosene.

11. A device according to one of Claims 2 to 10, **characterised in that** the travelling mechanism is constructed as a caterpillar travelling mechanism (12).

12. A device according to one of Claims 2 to 11, **characterised in that** the travelling mechanism includes a hydraulic drive.

13. A device according to Claim 12, **characterised in that** the hydraulic drive has a hydraulic pump (28) which drives a respective hydraulic motor for each chain (13, 14) of the caterpillar travelling mechanism (12).

14. A device according to one of Claims 2 to 13, **characterised in that** the spray extraction means includes a pump (48) for delivering the decontamination fluid, a pressure line (54) having an application part (58) arranged at its free end for transferring and applying the decontamination fluid delivered by the pump (48) from the supply tank (46) to the surface to be decontaminated and also a suction line (56) and a suction unit (60) for receiving used decontamination fluid and returning it to the receiving tank (44).

15. A device according to Claim 14, **characterised in that** the pressure line and the suction line (54, 56) are integrated in a single application hose (50).

16. A device according to Claim 15, **characterised in that** the application hose (50) is heat-insulated.

17. A device according to Claim 15 or 16, **characterised in that** the application hose (50) includes a heating element.

18. A device according to one of Claims 15, 16 and 17, **characterised in that** the device (10) has a hose drum (22) for winding up the pressure line (54) and the suction line (56).

19. A device according to one of Claims 14 to 18, **characterised in that** the pump (48) and/or the suction unit (60) are arranged adjacent to the hose drum (22).

20. A device according to one of Claims 14 to 18, **characterised in that** the pump (48), the suction unit (60) and the hose drum (22) are arranged in a receiving chamber (63) of the device (10), which may be heated by the waste heat of the drive motor (24).

21. A device according to Claim 19 or 20, **characterised in that** the device (10) has a frost protection hood (65) for covering the hose drum (22).

## Revendications

1. Procédé de décontamination d'espaces intérieurs, dans lequel on dispose d'une station de base et d'au moins une unité secondaire mobile, et dans lequel la station de base comporte un réservoir de stockage d'agent de décontamination et l'unité secondaire comporte un véhicule automoteur tout-terrain comportant un moteur d'entraînement et un équipement de décontamination,
**caractérisé en ce que** la station de base comporte une réserve de carburant destiné à l'unité secondaire, et l'unité secondaire comporte un conteneur d'agent de décontamination opérationnel et **en ce que** l'on ravitaille l'unité secondaire en agent de décontamination et en carburant au niveau la station de base, puis on déplace l'unité secondaire vers l'objet dont l'espace intérieur doit être décontaminé et l'on procède à la décontamination de l'espace intérieur au moyen de l'équipement de décontamination et de l'agent de décontamination, et enfin on ramène l'unité secondaire à la station de base pour la ravitailler en agent de décontamination et en carburant.

2. Dispositif de décontamination d'espaces intérieurs, en particulier de mise en oeuvre du procédé de la revendication 1, dans lequel le dispositif (10) comprend un véhicule automoteur (12) comportant un moteur d'entraînement (24) ainsi qu'un dispositif d'aspersion et d'extraction (48, 22, 58, 60) destiné à appliquer un liquide de décontamination sur une surface intérieure à décontaminer et à récupérer de la surface le liquide de décontamination usé,
**caractérisé en ce que** le dispositif est conformé en unité secondaire mobile comportant un véhicule tout-terrain (10), un réservoir (46) de stockage de liquide de décontamination, un réservoir de récupération de liquide de décontamination usé et un générateur (26), le liquide de décontamination pouvant être transféré dans le réservoir de récupération (44) au moyen du dispositif d'aspersion et d'extraction (48, 22, 58, 60).

3. Dispositif selon la revendication 2, **caractérisé en ce que** le dispositif (10) comporte au moins un élément de raccordement électrique (72) destiné à raccorder des appareils électriques supplémentaires, ainsi que des éléments de retenue (69, 70) destinés à maintenir les appareils supplémentaires, en particulier un appareil d'aspiration d'impuretés sèches et humides, un générateur d'aérosol et/ou un appareil d'extraction à vapeur.

4. Dispositif selon la revendication 2 ou 3, **caractérisé en ce que** le réservoir de récupération (44) comporte un raccord d'aspiration (74) destiné à aspirer le liquide de décontamination usé.

5. Dispositif selon l'une des revendications 2 à 4, **caractérisé en ce que** le réservoir de stockage et le réservoir de récupération (46 resp. 44) se présentent chacun sous la forme d'une chambre d'un double réservoir combiné (20), les deux chambres étant séparées l'une de l'autre par une paroi intermédiaire (40) à géométrie variable.

6. Dispositif selon la revendication 5, **caractérisé en ce que** la paroi intermédiaire (40) comporte une membrane flexible (41).

7. Dispositif selon l'une des revendications 2 à 6, **caractérisé en ce que** le réservoir de stockage et le réservoir de récupération (44, 46) sont isolés thermiquement.

8. Dispositif selon la revendication 7, **caractérisé en ce que** le réservoir de stockage et le réservoir de récupération (46, 44) comportent un dispositif de chauffage.

9. Dispositif selon l'une des revendications 2 à 8, **caractérisé en ce que** le moteur d'entraînement est conformé en moteur à carburant (24).

10. Dispositif selon la revendication 9, **caractérisé en ce que** le moteur d'entraînement peut être utilisé au choix avec du gazole ou du kérosène.

11. Dispositif selon l'une des revendications 2 à 10, **caractérisé en ce que** le véhicule est conformé en véhicule à chenilles (12).

12. Dispositif selon l'une des revendications 2 à 11, **caractérisé en ce que** le véhicule comporte une commande hydraulique.

13. Dispositif selon la revendication 12, **caractérisé en ce que** la commande hydraulique comporte une pompe hydraulique (28) qui entraîne un moteur hydraulique pour chaque chaîne (13, 14) du véhicule à chenilles (12).

14. Dispositif selon l'une des revendications 2 à 13, **caractérisé en ce que** le dispositif d'aspersion et d'extraction comporte :
- une pompe (48) d'alimentation en liquide de décontamination,
- une conduite de refoulement (54) comportant une pièce d'application (58) disposée à son extrémité libre, et destinée à transférer et appliquer le liquide de décontamination délivré par la pompe (48) du réservoir de stockage (46) à la surface à décontaminer, et
- une conduite d'aspiration (56) et une unité d'aspiration (60) destinées à récupérer le liquide de décontamination usé et à le ramener dans le réservoir de récupération (44).

15. Dispositif selon la revendication 14, **caractérisé en ce que** les conduites de refoulement et d'aspiration (54, 56) sont intégrées dans un tuyau d'application unique (50).

16. Dispositif selon la revendication 15, **caractérisé en ce que** le tuyau d'application (50) comporte une isolation thermique.

17. Dispositif selon la revendication 15 ou 16, **caractérisé en ce que** le tuyau d'application (50) comporte un élément de chauffage.

18. Dispositif selon l'une des revendications 15, 16 ou 17, **caractérisé en ce que** le dispositif (10) comporte un tambour de stockage de tuyau (22) destiné à enrouler la conduite de refoulement (54) et la conduite d'aspiration (56).

19. Dispositif selon l'une des revendications 14 à 18, **caractérisé en ce que** la pompe (48) et/ou l'unité d'aspiration (60) sont disposées à proximité du tambour de stockage de tuyau (22).

20. Dispositif selon l'une des revendications 14 à 19, **caractérisé en ce que** la pompe (48), l'unité d'aspiration (60) et le tambour de stockage de tuyau (22) sont disposés dans un logement (63) du dispositif (10), lequel logement peut être chauffé par la chaleur dégagée par le moteur d'entraînement (24).

21. Dispositif selon la revendication 19 ou 20, **caractérisé en ce que** le dispositif (10) comporte un capot (65) de protection contre le gel qui est destiné à recouvrir le tambour de stockage de tuyau (22).
